# EUROPÄISCHE PATENTSCHRIFT

(11) **EP 0 386 523 B1**
(45) Veröffentlichungstag und Bekanntmachung des Hinweises auf die Patenterteilung: **03.02.1993**
(21) Anmeldenummer: 90103308.4
(22) Anmeldetag: 21.02.1990
(51) Int. Cl.: E06B 3/96, B29C 37/04

(54) **Vorrichtung zur Bearbeitung der Schweisswülste an Kunststoffrahmen**
Treating device for the welding beads on frames of synthetic material
Dispositif de traitement des cordons de soudage de cadres en matière artificielle

(30) Priorität: 10.03.1989 DE 3907709
(43) Veröffentlichungstag der Anmeldung: 12.09.1990
(73) Patentinhaber: Maurus, Leonhard, D-87700 Memmingen (DE)
(72) Erfinder: Maurus, Leonhard, D-87700 Memmingen (DE)
(74) Vertreter: Pfister, Helmut, Dipl.-Ing.

(56) Entgegenhaltungen:
- EP-A- 0 303 103
- EP-A- 0 320 624
- DE-A- 3 343 787

## Beschreibung

Die Erfindung betrifft eine Vorrichtung zur Bearbeitung der Schweißwülste von Rahmen aus rechtwinklig miteinander verschweißten ersten und zweiten Kunststoffprofilen, mit einer Vorrichtung zum Festspannen der Rahmen, und mit Bahnen zur Führung der Bearbeitungswerkzeuge längs der Schweißwülste.

Fensterrahmen, Türrahmen oder ähnliche Rahmen werden aus Kunststoffprofilen, die im Inneren in der Regel Hohlräume aufweisen, zusammengeschweißt. Dabei werden die Kunststoffprofile auf Gehrung geschnitten, an den Gehrungsflächen erwärmt und gegeneinander gedrückt, so daß die einzelnen Kunststoffprofile miteinander verschweißen. Im allgemeinen sind die miteinander zu verschweißenden Kunststoffprofile in einem rechten Winkel zueinander ausgerichtet.

Ein Rahmen, beispielsweise ein Fensterflügel oder auch ein Außenrahmen für ein Fenster, kann dabei aus vier miteinander verschweißten Rahmenteilen bestehen. Häufig werden jedoch insbesondere die Außenrahmen unterteilt, und es werden Kämpfer eingeschweißt. Während an den Rahmenecken geradlinige Schweißnähte entstehen, ergeben sich beim Einschweißen von Kämpfern an den oberen und unteren Enden des Kämpfers abgewinkelte Schweißverbindungen.

Beim Schweißen entstehen regelmäßig an den Schweißverbindungen Schweißwülste, und zwar dadurch, dar das zum Schweißen erwärmte und erweichte Kunststoffmaterial nach außen gedrückt wird. Diese Schweißwülste erfordern eine Nacharbeit, und zwar an denjenigen Flächen, die von außen sichtbar sind oder die mit anderen Bauteilen zusammenwirken sollen.

Zur Bearbeitung der Schweißwülste sind Vorrichtungen (z.B. aus der DE-A-3343787) bekannt, bei denen die zu bearbeitende Eckverbindung in die Vorrichtung eingeschoben wird. Die Spannmittel in der Vorrichtung erfassen die beiden rechtwinklig zusammenstoßenden Kunststoffprofile, mit dem Ergebnis, daß die zu bearbeitenden Schweißwülste auf den beiden Sichtflächen eine vorbestimmte Ausrichtung erfahren, die zusammenpassen mit Bahnen zur Führung der Bearbeitungswerkzeuge. Auf diese Weise ist es leicht möglich, die Schweißwülste beispielsweise mittels eines Fräsers abzufräsen oder auch durch ein Messer abzustechen. Soll die Außenkante bearbeitet werden, kann dies ebenfalls durch Stechmesser oder durch Fräser erfolgen. Entsprechendes gilt für das Inneneck, soweit dessen Bearbeitung notwendig ist.

Nach der Bearbeitung eines Eckes eines Rahmens wird der Rahmen auf einem Tisch gedreht bzw. verschoben, so daß die nächste zu bearbeitende Eckverbindung in die Maschine eingeführt werden kann.

Während somit die Bearbeitung einer Eckverbindung vom Prinzip her wenig Schwierigkeiten bietet, weil die Ausrichtung des Schweißwulstes im allgemeinen 45 Grad gewinkelt ist zur Ausrichtung der zu verschweißenden Kunststoffprofile und somit die geometrischen Verhältnisse vergleichsweise einfach sind, ergeben sich bei der Bearbeitung der Schweißwülste an den Enden von eingeschweißten Kämpfern Schwierigkeiten. Während nämlich die äußere Ecke einer Eckverbindung übereinstimmt mit der Lage des Schweißwulstes bzw. es leicht möglich ist, den Rahmen an solchen Anschlägen anzulegen, dar der Schweißwulst eine vorbestimmte Lage einnimmt, ist dies bei eingeschweißten Kämpfern oder ähnlichen Elementen nicht möglich.

Hinzu kommt, daß bei Fenstern mit eingesetzten Kämpfern das Kunststoffprofil des Kämpfers verschiedene Ausbildungen aufweisen kann, je nachdem, ob der Kämpfer einen Rahmenteil begrenzt, in den beispielsweise ein Fensterflügel oder eine Fensterscheibe von außen oder von innen eingesetzt werden soll.

Es ist Aufgabe der Erfindung, eine Vorrichtung vorzuschlagen, die die Bearbeitung der Schweißwülste von Rahmen aus Kunststoffprofilen erlaubt, wenn es um die Bearbeitung der Schweißwülste an den Enden von Kämpfern geht.

Zur Lösung dieser Aufgabe geht die Erfindung aus von einer Vorrichtung der eingangs angegebenen Gattung. Die Erfindung schlägt vor, daß die Vorrichtung aus zwei relativ zueinander beweglichen Gestellen besteht, die je eine Spannbacke eines Spannbackenpaares zum Festspannen des ersten Kunststoffprofils tragen, daß mindestens eine weitere Spanneinrichtung zum Festlegen des zweiten Kunststoffprofils vorgesehen ist, wobei die beiden Gestelle je eine geradlinige Führungsbahn aufweisen, die in einem Winkel von 45 Grad zur relativen Bewegungsrichtung der Gestelle ausgerichtet sind, derart, daß die beiden Führungsbahnen miteinander einen rechten Winkel einschließen und sich in unterschiedlicher Höhenlage schneiden.

Bei der erfindungsgemäßen Vorrichtung wird eine Führungsbahn zur Führung der Bearbeitungswerkzeuge erreicht, die in einer genau vorbestimmten Lage zu den zu bearbeitenden Schweißwülsten verläuft, so daß es leicht möglich ist, diese Führungsbahn zur Führung der Werkzeuge zu benützen. Insbesondere erreicht die Erfindung eine exakte Abbildung des Verlaufes des zu bearbeitenden Schweißwulstes, einschließlich der jeweiligen Lage des Eckpunkts, also beispielsweise der Spitze des eingeschweißten Kämpfers.

Die Wirkung der Erfindung ist dabei weitgehend unabhängig von der Ausbildung der verwendeten Kunststoffprofile. Es genügt, wenn die Spanneinrichtungen, die die ersten und zweiten Kunststoffprofile erfassen und festspannen, so ausgebildet sind, daß jeweils diejenige Profilfläche gespannt wird, die für die Lage des Schweißwulstes entscheidend ist. So können beispielsweise die einzelnen Profile vorstehende Konturen aufweisen, die beim Spannen ausgespart werden, so daß sie sich nicht auf die Lage der Führungsbahnen auswirken.

Durch die erfindungsgemäße Anordnung ist es nicht nur möglich, die Werkzeuge zur Bearbeitung der Kämpferverbindungen zu führen. Die erfindungsgemäße Anordnung kann in gleicher Weise auch benutzt werden, beispielsweise eine Eckverbindung eines Rahmens zu bearbeiten. In diesem Fall wird dann nur eine der Führungsbahnen verwendet.

Die weitere Spanneinrichtung zum Festlegen des zweiten Kunststoffprofils kann beispielsweise am Grundgestell der Maschine angeordnet sein. Es ist aber auch möglich, diese Spanneinrichtung auf den Gestellen anzuordnen, wobei es sich empfiehlt, die Spanneinrichtung zweiteilig zu gestalten, so daß jedes Gestell eine Spanneinrichtung besitzt. Hierdurch wird die Ausrichtgenauigkeit erhöht. Beim Bearbeiten einer Eckverbindung besteht ferner eine freie Wahlmöglichkeit zur Einlegung der Eckverbindung in die Vorrichtung.

Die Erfindung schlägt weiter mit den Führungsbahnen zusammenwirkende Tastmittel, insbesondere Tastrollen vor, die die Bewegungen der Werkzeuge steuern. Diese Tastmittel bzw. Tastrollen bewegen sich entlang der Führungsbahnen und vermitteln so den zugehörigen Werkzeugen den gewünschten exakten Vorschub längs des zu bearbeitenden Schweißwulstes. Dabei kann beispielsweise vorgesehen sein, daß eine einzige Tastrolle je Werkzeug an der Führungsbahn entlang bewegt wird. Es ist klar, daß eine solche Führung beispielsweise für ein Fräswerkzeug mit senkrecht zur Bearbeitungsfläche augerichteter Drehachse ausreicht. Sind die Bearbeitungswerkzeuge als Stech- oder Ziehmesser gestaltet, ist eine Ausrichtung des Werkzeugs notwendig. Auch hierzu können die Führungsbahnen Verwendung finden, beispielsweise durch die Verwendung von Schlitten oder Anordnungen mit einem Tastrollenpaar, das dann dem Werkzeug auch die Ausrichtung aufzwingt.

In weiterer Ausbilden der Erfindung ist vorgesehen, daß die Tastmittel und die Werkzeuge auf einem Kreuzschlitten angeordnet sind, dessen einer Schlitten längs des zweiten Kunststoffprofils verschiebbar ist, und wobei die Tastmittel mittels des zweiten Schlittens rechtwinklig hierzu gegen die Führungsbahnen gedrückt sind.

Die Erfindung löst hierdurch in einfachster Weise auch das Problem der Bewegung der Werkzeuge entlang der beiden Teile der zu bearbeitenden Schweißwülste, die sich in einem rechten Winkel schneiden. Bei der erfindungsgemäßen Anordnung ist nur ein Vorschub in der einen Richtung, nämlich längs des zweiten Kunststoffprofiles notwendig. Durch die Anpressung an die Führungsbahnen folgen die Tastmittel der um 45 Grad gewinkelten Führungsbahn, wodurch ein komplizierter doppelter Antrieb in den beiden sich rechtwinklig kreuzenden Richtungen vermieden werden kann. Als Anpreßkräfte können die üblichen Mittel Verwendung finden, beispielsweise Federkräfte, pneumatische oder hydraulische Mittel bzw. gegebenenfalls auch Gewichtskräfte.

Die Erfindung schlägt ferner Schaltnocken an den Gestellen vor und mit den Schaltnocken zusammenwirkende Schaltmittel am Kreuzschlitten. Durch die erfindungsgemäße Anordnung ergibt sich nämlich, daß unabhängig beispielsweise von der Dicke des ersten Kunststoffprofils, also des Kämpfers, der Anfang des Schweißwulstes relativ zum Gestell immer gleich bleibt. Diesem Bezugspunkt kann beispielsweise ein Schaltnocken zugeordnet werden, so daß bei der Bewegung des Kreuzschlittens dem Werkzeug jeweils der Beginn des Schweißwulstes signalisiert wird. Entsprechendes gilt für andere Bezugspunkte, beispielsweise auch für das Ende des Schweißwulstes auf der anderen Seite des Kämpfers oder dergleichen.

Im Fall des Einsatzes von Kunststoffprofilen mit stark unterschiedlicher Ausgestaltung ist es ferner möglich, an den Gestellen mehrere wahlweise ansteuerbare Schaltnocken oder Schaltnockenreihen vorzusehen.

Günstig ist es, wenn die mit den Führungsbahnen zusammenwirkenden Tastmittel höhenverstellbar sind, um wahlweise mit der einen oder anderen oder mit beiden Führungsbahnen zusammenzuwirken. Auf diese Weise ist es beispielsweise möglich, den Schweißwulst, der einer der Führungsbahnen zugeordnet ist, über seine ganze Länge gleichförmig zu bearbeiten. Bei einem zweiten Hub, bei dem dann die andere Führungsbahn wirksam ist, kann dann der andere Schweißwulst bearbeitet werden. Die Anordnung eignet sich insbesondere auch zur Bearbeitung von Eckverbindungen, bei denen jeweils nur die eine oder andere Führungsbahn benötigt wird.

Es empfiehlt sich, die Tastmittel symmetrisch anzuordnen, also von oben nach unten oder von unten nach oben ragend. Dies erleichtert die Ausnützung der einen oder anderen Führungsbahn.

In weiterer Ausgestaltung der Erfindung ist vorgesehen, daß die Spannbacken umklappbar ausgebildet sind. Bei ähnlichen Vorrichtungen ist es bekannt, die Spannbacken absenkbar anzuordnen, um den Rahmen oder ähnliche Werkstücke auf der Auflagefläche ungestört verschieben zu können. Wenn aber die Spannmittel mit Profilen zusammenwirken, die beispielsweise im Bereich der Auflagefläche eine vorstehende Kante besitzen, führt das Absenken nicht zum Erfolg. Durch umklappbare Spannbacken läßt sich dann erreichen, auch in solchen Fällen die Rahmen auf der Auflagefläche zu bewegen.

Günstig ist es, wenn an den Spannflächen der Spanneinrichtungen zum Festlegen der Kunststoffprofile, insbesondere zum Festlegen des zweiten Kunststoffprofils, Tastschalter angeordnet sind, deren Signale die Bewegungen der Bearbeitungswerkzeuge steuern. Eine solche Bauweise erleichtert die Bedienung wesentlich. Beim Einspannvorgang erkennt die Maschine selbst bzw. erkennen die Spannbacken die Kontur des jeweiligen Kunststoffprofils. Die entsprechenden Signale steuern dann die Werkzeuge auf ihren Bahnen. Insbesondere können von diesen Signalen die Bearbeitungslängen der Werkzeuge abhängig gemacht werden, oder auch die Einsatzstellen der Werkzeuge.

In der Zeichnung sind einige Ausführungsbeispiele der Erfindung schematisch dargestellt. Es zeigen:
Fig. 1 eine Ansicht eines aus Kunststoffprofilen bestehenden Rahmens, wie dieser beispielsweise durch die erfindungsgemäße Vorrichtung bearbeitet werden kann,
Fig. 2 eine Schnittdarstellung durch die Darstellung der Fig. 1 entsprechend der Schnittlinie II-II,
Fig. 3 eine Draufsicht auf eine Einzelheit der Darstellung der Fig. 1 in vergrößertem Maßstab,
Fig. 4 eine Ansicht zur Darstellung der Fig. 3, entsprechend der Pfeilrichtung IV,
Fig. 5 eine Draufsicht auf eine erfindungsgemäße Vorrichtung,
Fig. 6 eine vergrößerte Ansicht einer Einzelheit der Fig. 5 in Richtung des Pfeiles VI,
Fig. 7 eine Draufsicht der Darstellung der Fig. 6,
Fig. 8 eine Darstellung einer abgewandelten Einzelheit der Erfindung,
Fig. 9 eine Draufsicht auf eine Variante der erfindungsgemäßen Vorrichtung,
Fig. 10 eine Darstellung einer Einzelheit der erfindungsgemäßen Vorrichtung,
Fig. 11 eine Darstellung der umklappbaren Spannbacken und
Fig. 12 eine Darstellung einer Einzelheit eines Rahmens, wie er mit der erfindungsgemäßen Vorrichtung bearbeitet wird.

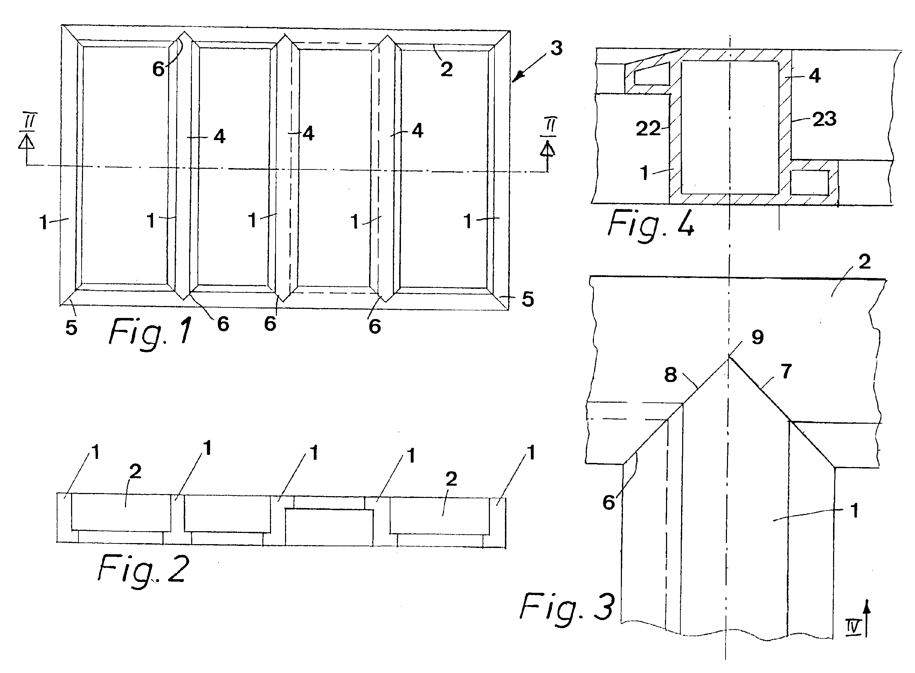

Die Fig. 1 zeigt einen Rahmen 3 eines Fensters aus verschweißten Kunststoffprofilen, das insgesamt vier Flügel aufnehmen kann. Dabei sind zwei erste Kunststoffprofile 1 mit den zweiten Kunststoffprofilen 2 verbunden. Diese Kunststoffprofile 1 besitzen, wie aus der Fig. 2 hervorgeht, jeweils eine unterschiedliche Gestalt. Diese unterschiedliche Gestalt wirkt sich insbesondere bei den als Kämpfern 4 dienenden ersten Kunststoffprofilen dahingehend aus, daß die Kontur der Schweißwülste 6 in der Regel verschieden sind.

Bei der Erfindung geht es im wesentlichen um die Bearbeitung der Schweißwülste 6 von eingeschweißten Kämpfern. Die Erfindung ist aber auch einsetzbar für die Bearbeitung der Schweißwülste 5 in den Ecken des Rahmens 3.

Wie insbesondere aus der Fig. 3 hervorgeht, besteht der Schweißwulst 6 zwischen den Kunststoffprofilen 1 und 2 dann, wenn diese Kunststoffprofile 2 Kämpfer sind, aus den Teilen 7 und 8. Diese Schweißwulstteile sind rechtwinklig zueinander ausgerichtet und treffen sich an der Spitze 9. Es ist klar, daß ein derartiger Schweißwulst aus den Teilen 7 und 8 nicht nur auf der Oberfläche des Rahmens 3 besteht und zu bearbeiten ist, sondern in gleicher Weise auch auf der Unterfläche. In der Regel werden für die Bearbeitung der Ober- und der Unterfläche jeweils verschiedene Werkzeuge eingesetzt. Diese Werkzeuge können aber ohne weiteres an den gleichen Elementen, insbesondere an den gleichen Schlitten usw. gelagert sein, und die Führungsbahnen, die nachstehend noch näher beschrieben werden, gelten in gleicher Weise zur Steuerung der Werkzeuge auf der Ober- und auf der Unterfläche. Wie insbesondere aus der Fig. 4 erkennbar ist, sind die Kunststoffprofile 1, aber auch die Kunststoffprofile 2 als Hohlprofile gestaltet, wie dies an sich bekannt ist.

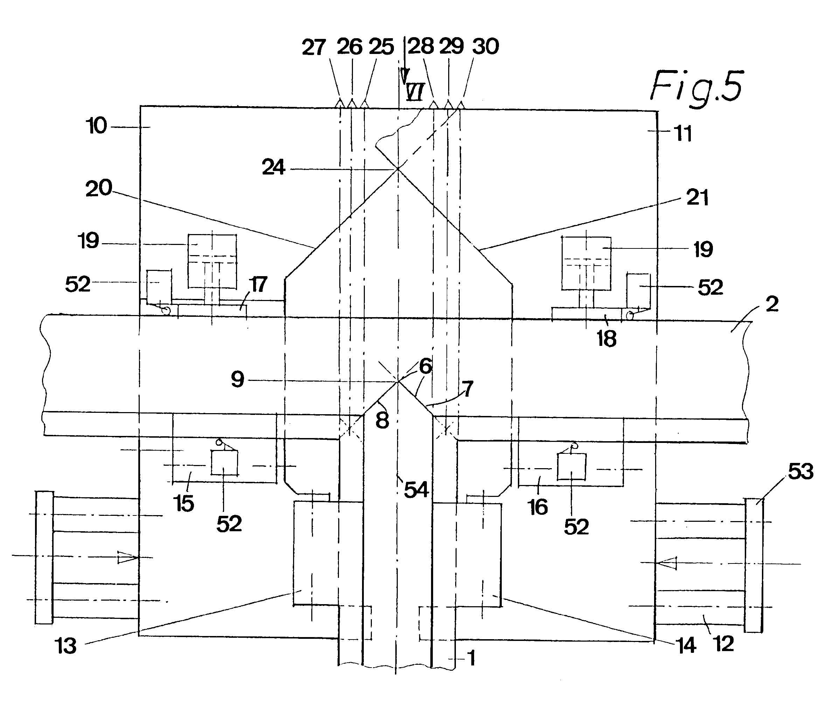

Aus der Fig. 5 geht der Grundaufbau der erfindungsgemäßen Vorrichtung hervor. Auf einem Grundgestell 53, das nur in Teilen dargestellt ist, sind die beiden Gestelle 10 und 11 verschiebbar. Zu diesem Zweck ist die Führung 12 vorgesehen, die beispielsweise für beide Gestelle 10 und 11 gemeinsam sein kann. Der Antrieb zur Bewegung der Gestelle 10 und 11 ist nicht näher dargestellt.

Die Erfindung kann auch dadurch realisiert werden, daß eines der Gestelle 10 oder 11 mit dem Grundgestell fest verbunden ist, so daß nur das andere Gestell eine Relativbewegung ausführen kann.

Die Gestelle 10 und 11 tragen insgesamt zwei Spanneinrichtungen. Eine dieser beiden Spanneinrichtungen besteht aus den beiden Spannbacken 13 und 14, wobei die Spannbacke 13 auf dem Gestell 10 und die Spannbacke 14 auf dem Gestell 11 angeordnet ist. Beide Spannbacken wirken zusammen und dienen zum Festspannen des ersten Kunststoffprofils 1.

Auf den Gestellen 10 und 11 ist auch eine weitere Spanneinrichtung vorgesehen, die aus den relativ festen Spannbacken 15 und 16 und aus den beweglichen Spannplatten 17 und 18 besteht. Dabei ist, wie die Zeichnung erkennen läßt, der eine Teil dieser Spanneinrichtung, bestehend aus den Teilen 15 und 17, dem Gestell 10 zugeordnet, der andere, bestehend aus den Teilen 16 und 18 dem Gestell 11. Die Zylinder 19 dienen jeweils zum Antrieb der Spannplatten 17 und 18.

An den einander zugewandten Seiten der Gestelle 10 und 11 sind die Führungsbahnen 20 und 21 vorgesehen, wobei die Anordnung derart getroffen ist, daß die Führungsbahn 20 unter die Führungsbahn 21 greift. Es ist klar, daß durch diese Anordnung die Gestelle 10 und 11 ohne weiteres gegeneinander bewegt werden können, und daß schließlich bei eingespanntem Rahmen 3 die Gestelle 10 und 11 fest miteinander verbunden sind.

Da die Flächen 22 und 23 (vgl. Fig. 4) die Anlageflächen für die Spannbacken 13 und 14 bilden, bestimmen die Flächen 22 und 23 die Ausrichtung des Schweißwulstes 6 bezüglich der in der Fig. 5 gezeigten Vorrichtung, wobei sich gleichzeitig beim Einspannen eine exakte Zuordnung der Führungsbahnen 20 und 21 zum Schweißwulst 6 ergibt. Der Kreuzungspunkt 24 der Führungsbahnen 20 und 21 ist immer exakt zur Spitze 9 des Schweißwulstes ausgerichtet. Vorzugsweise sind die Spitze 9 und der Kreuzungspunkt 24 in der Mittelebene 54 der Vorrichtung angeordnet. Es ist aber nicht notwendig, daß die Anordnung symmetrisch getroffen wird, wie in der Darstellung der Fig. 5. Entscheidend ist nur, daß immer eine gleiche gegenseitige Zuordnung der Spitze 9 und des Kreuzungspunktes 24 erhalten wird, so daß die Werkzeuge, die von den Führungsbahnen 20 und 21 gesteuert werden, genau auf den Schweißwulst 6 mit seinen Teilen 7 und 8 ausrichtbar sind.

Wie insbesondere aus der Fig. 5 deutlich wird, sind an dem in der Zeichnung oberen Ende der Gestelle 10 und 11 Schaltnocken 25 bis 30 vorgesehen. Da diese relativ fest an den Gestellen 10 und 11 angeordnet sind, stimmen diese überein mit den Flächen 22 oder 23 und werden auch bei unterschiedlich breiten Profilen immer den Anfang und das Ende bzw. wesentliche Stellen des Schweißwulstes 6 markieren.

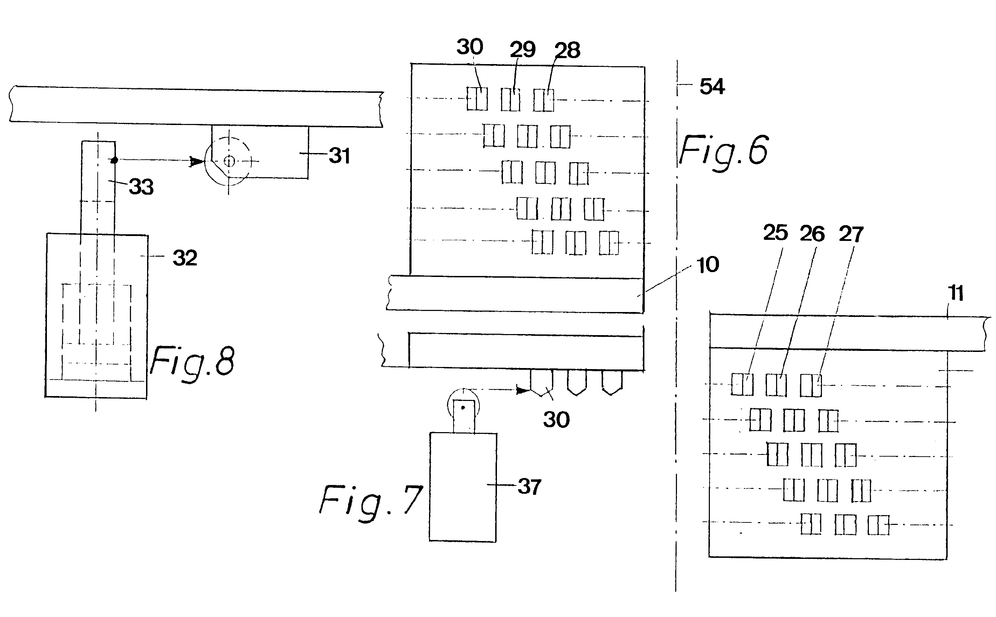

Für den Fall, daß stark unterschiedliche Profile Verwendung finden, können mehrere Reihen von Schaltnocken 25 bis 30 vorgesehen werden, wie dies in der Fig. 6 angedeutet ist, so daß bei entsprechender Höhenverstellung des Schalters 37 immer eine der Reihen der Schaltnocken ausgewählt werden kann.

Anstelle der Schaltnockenanordnung gemäß Fig. 6 und 7 kann zur Positionierung der Werkzeuge und zur Betätigung der Werkzeuge auch der Festanschlag 31 Verwendung finden, der mit dem Schaltstift 33 des Positionierzylinders 32 zusammenwirkt.

Auf diese Weise können eine Vielzahl von Profilen mit unterschiedlichen Bearbeitungsabständen und -wegen bearbeitet werden, ohne daß es notwendig ist, die Maschine jeweils umzurüsten. Die unterschiedlichen Bedürfnisse, die auftreten, werden beispielsweise durch die Fig. 12 deutlich gemacht. Auf der einen Seite des dort gezeigten Profils 1 sind relativ kurze Flächen 34 zu bearbeiten, auf der anderen Seite sind die entsprechenden zu bearbeitenden Flächen 55 bzw. Schweißwülste wesentlich breiter. Mittels unterschiedlicher Schaltnocken usw. lassen sich diese Unterschiede ohne weiteres beherrschen.

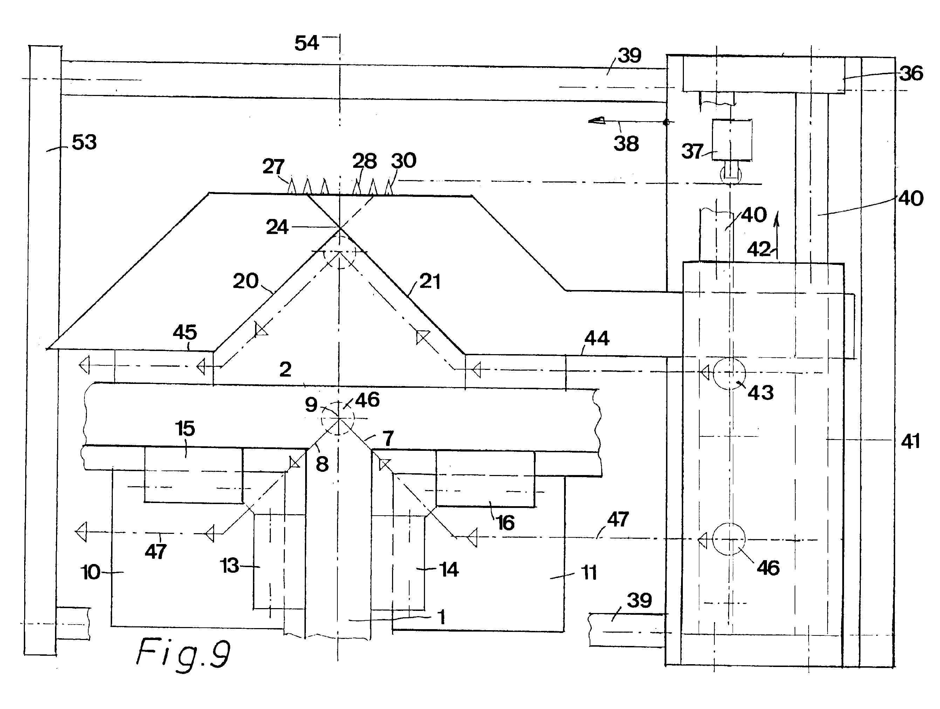

In der Darstellung der Fig. 9 ist zusätzlich zu den Elementen, die aus der Darstellung der Fig. 5 hervorgehen, eine Kreuzschlittenanordnung 36 gezeigt, wobei der eine Schlitten in Richtung des Pfeiles 38 gegenüber den Gestellen 10 und 11 bzw. dem Grundgestell verfahrbar ist. Dieser Verfahrbarkeit dienen die Bahnen 39. Der Schlitten trägt auf seinen Bahnen 40 einen weiteren Schlitten 41, der durch eine nicht näher dargestellte Einrichtung, die beispielsweise pneumatisch, hydraulisch, mechanisch, magnetisch oder dergleichen ausgebildet sein kann, in Richtung des Pfeiles 42 gedrückt wird. Die Tastrolle 43, die auf dem Schlitten 41 montiert ist bzw. von diesem getragen wird, liegt an der Führungsbahn 44 an, die an die Führungsbahn 21 anschließt. Es ist klar, daß bei einer Bewegung des Kreuzschlittens in Richtung des Pfeiles 38 die Tastrolle 43 von der Führungsbahn 44 auf die Führungsbahn 21 und von dort auf die Führungsbahn 20 und dann wieder auf die Führungsbahn 45 gelangen wird. Ein ebenfalls am Kreuzschlitten, und zwar auf dem Schlitten 41 montiertes Werkzeug 46 wird sich daher sinngemäß entlang der mit strichpunktierten Linien angedeuteten Bahn 47 bewegen, also beispielsweise den Schweißwulst auf der Sichtfläche bearbeiten. Mittels der Nocken 25 bis 30 läßt sich ohne weiteres eine Höhenbewegung des Werkzeuges erreichen, so daß auch Profilabstufungen bearbeitet werden können. Die Nocken lassen auch eine Abhebung, Ausschaltung oder Umwendung des Werkzeugs zu, bzw. den Einsatz eines weiteres Werkzeugs, beispielsweise für die Bearbeitung anders gerichteter Flächen.

Es wird bemerkt, daß die Werkzeuge auf der Unterseite des Profils gleichartig geführt werden, wobei hierfür in der Regel der gleiche Kreuzschlitten 36 Verwendung findet.

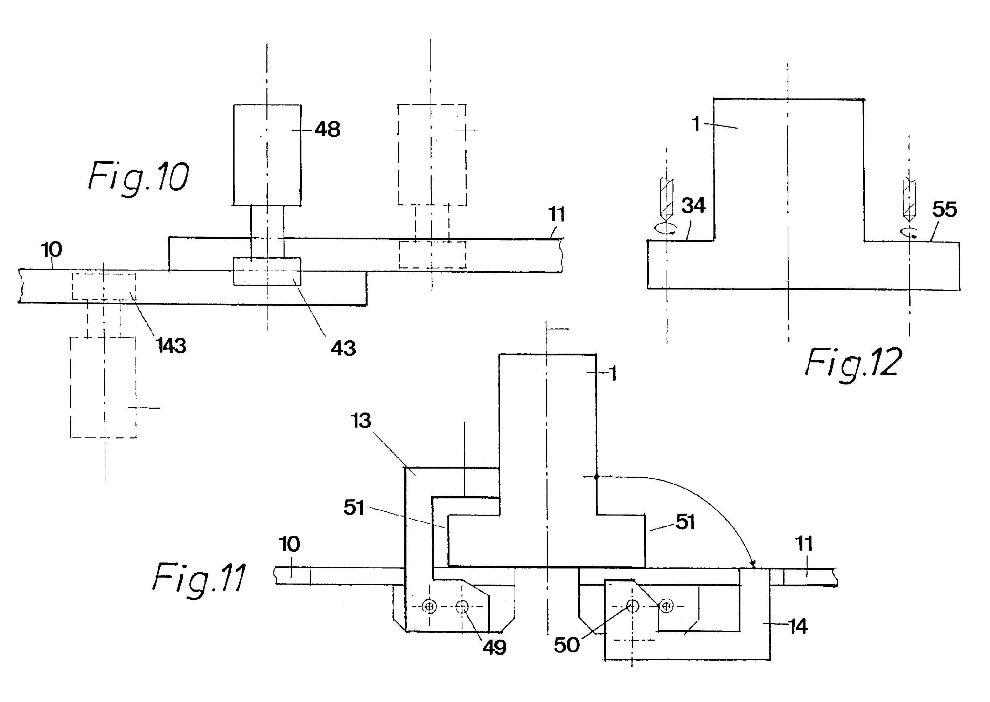

Im allgemeinen wird die Tastrolle 43 eine mittlere Höhenlage einnehmen, wie dies aus der Fig. 10 deutlich hervorgeht. Es ist aber auch möglich, die Tastrolle 43 anzuheben, so daß sie nur mit der Führungsbahn 21 Kontakt hat, wie dies in der Fig. 10 mit gestrichelten Linien dargestellt ist.

Eine andere Tastrolle 143 kann symmetrisch angeordnet sein und von der Unterseite her mit der Führungsbahn 20 zusammenwirken, wenn dies gewünscht wird. Zur Höhenverstellung der Tastrolle dient beispielsweise ein Zylinder 48.

Die Fig. 11 zeigt die umklappbaren Spannbacken 13 und 14. Diese sind um die Gelenke 49 und 50 beweglich, so daß sie jeweils die Spannfläche 22 bzw. 23 erreichen können, ohne mit den vorstehenden Profilteilen 51 zu kollidieren.

Aus der Fig. 5 geht noch hervor, daß die Spannplatten 17 und 18 und die Spannbacken 15 und 16 je mit Tastschaltern 52 versehen sind, die es erlauben, die Ausbildung des zweiten Profilteils 2 zu ertasten, wodurch die Bewegung der Werkzeuge beeinflußbar ist.

## Patentansprüche

1. Vorrichtung zur Bearbeitung der Schweißwülste von Rahmen aus rechtwinklig miteinander verschweißten ersten und zweiten Kunststoffprofilen, mit einer Vorrichtung zum Festspannen der Rahmen, und mit Bahnen zur Führung der Bearbeitungswerkzeuge längs der Schweißwülste, dadurch gekennzeichnet, dar die Vorrichtung aus zwei relativ zueinander beweglichen Gestellen (10,11) besteht, die je eine Spannbacke (13,14) eines Spannbackenpaares zum Festspannen des ersten Kunststoffprofils (1) tragen, daß mindestens eine weitere Spanneinrichtung (15 - 18) zum Festlegen des zweiten Kunststoffprofils (2) vorgesehen ist, wobei die beiden Gestelle je eine geradlinige Führungsbahn (20,21) aufweisen, die in einem Winkel von 45 Grad zur relativen Bewegungsrichtung der Gestelle ausgerichtet sind, derart, daß die beiden Führungsbahnen miteinander einen rechten Winkel einschließen und sich in unterschiedlicher Höhenlage schneiden.

2. Vorrichtung nach Anspruch 1, dadurch gekennzeichnet, daß die weitere Spanneinrichtung (15 - 18) zum Festlegen des zweiten Kunststoffprofils (2) auf den Gestellen (10,11) angeordnet ist.

3. Vorrichtung nach einem oder beiden der vorhergehenden Ansprüche, dadurch gekennzeichnet, daß mit den Führungsbahnen (20,21) zusammenwirkende Tastmittel, insbesondere Tastrollen (43) vorgesehen sind, die die Bewegungen der Werkzeuge (46) steuern.

4. Vorrichtung nach einem oder mehreren der vorhergehenden Ansprüche, dadurch gekennzeichnet, daß die Tastmittel (43) und die Werkzeuge (46) auf einem Kreuzschlitten (36) angeordnet sind, dessen einer Schlitten längs des zweiten Kunststoffprofiles (2) verschiebbar ist, und wobei die Tastmittel mittels des zweiten Schlittens (41) rechtwinklig hierzu gegen die Führungsbahnen gedrückt sind.

5. Vorrichtung nach einem oder mehreren der vorhergehenden Ansprüche, gekennzeichnet durch Schaltnocken (25 - 30) an den Gestellen (10,11) und mit den Schaltnocken zusammenwirkenden Schaltmitteln (37) am Kreuzschlitten.

6. Vorrichtung nach einem oder mehreren der vorhergehenden Ansprüche, gekennzeichnet durch mehrere wahlweise ansteuerbare Schaltnocken oder Schaltnockenreihen an den Gestellen (10,11).

7. Vorrichtung nach einem oder mehreren der vorhergehenden Ansprüche, dadurch gekennzeichnet, daß die mit den Führungsbahnen zusammenwirkenden Tastmittel (43) höhenverstellbar sind, um wahlweise mit der einen oder anderen oder mit beiden Führungsbahnen (20,21) zusammenzuwirken.

8. Vorrichtung nach einem oder mehreren der vorhergehenden Ansprüche, gekennzeichnet durch symmetrisch angeordnete, von oben nach unten und von unten nach oben ragende Tastmittel (43).

9. Vorrichtung nach einem oder mehreren der vorhergehenden Ansprüche, dadurch gekennzeichnet, daß die Spannbacken (13,14) umklappbar ausgebildet sind.

10. Vorrichtung nach einem oder mehreren der vorhergehenden Ansprüche, dadurch gekennzeichnet, daß an den Spannflächen der Spanneinrichtung insbesondere zum Festlegen des zweiten Kunststoffprofils Tastschalter (52) angeordnet sind, deren Signale die Bewegungen der Bearbeitungswerkzeuge steuern.

## Claims

1. Treating device for the welding beads on frames made of first and second plastic profiles welded at right angles, having a device for clamping the frames, and having guideways for guiding the machining tools along the welding beads, characterized in that the device comprises two supports (10,11) movable relative to one another each carrying one clamping jaw (13,14) of a pair of clamping jaws for clamping the first plastic profile (1), and that at least one further clamping device (15-18) for fixing the second plastic profile (2) is provided. Each of the two supports has a rectilinear guideway (20,21). Said guideways are arranged at an angle of 45 degrees to the direction of movement of the supports, in such a way that the two guideways together form a right angle and intersect at a different height.

2. Device according to claim 1, characterized in that the other clamping device (15-18) for fixing the second plastic profile (2) is arranged on the supports (10,11).

3. Device according to one or two of the preceding claims, characterized in that tracing means, in particular tracing rollers (43) acting together with the guideways (20,21) are provided, said tracing means controlling the movement of the tools (46).

4. Device according to one or more of the preceding claims, characterized in that the tracing means (43) and the tools (46) are arranged on a compound slide (36), with one slide being slideable along the second plastic profile (2), and with the tracing means being pushed against the guideways at right angles to the sliding direction of the first slide of the compound slide by means of the second slide of the compound slide.

5. Device according to one or more of the preceding claims, characterized by operating cams (25-30) on the supports (10,11) and operating means ( 37) on the compound slide acting together with the operating cams.

6. Device according to one or more of the preceding claims, characterized by several alternatively selectable operating cams or rows of operating cams on the supports (10,11).

7. Device according to one or more of the preceding claims, characterized in that the tracing means (43) acting together with the guideways are adjustable in height in order to act together alternatively with one or the other or with both guideways (20,21).

8. Device according to one or more of the preceding claims, characterized by symmetrically arranged tracing means (43) pointing in a downward direction from above or in an upward direction from below.

9. Device according to one or more of the preceding claims, characterized in that the clamping jaws (13,14) are designed as reversible jaws.

10. Device according to one or more of the preceding claims, characterized in that contact switches (52) are arranged on the clamping surfaces of the clamping device in particular for fixing the second plastic profile, the signals of said contact switches controlling the movements of the machining tools.

## Revendications

1. Dispositif de traitement des cordons de soudage de cadres constitués de premiers et de seconds profilés en matière plastique soudés orthogonalement les uns avec les autres, comprenant un dispositif pour la fixation des cadres et des glissières pour le guidage des outils de traitement le long des cordons de soudage, **caractérisé en ce** que le dispositif se compose de deux châssis (10, 11) déplaçables l'un par rapport à l'autre qui portent chacun une mâchoire de serrage (13, 14) d'une paire de mâchoires de serrage pour la fixation du premier profilé en matière plastique (1), qu'il comprend au moins un dispositif de serrage supplémentaire (15 à 18) pour l'immobilisation du second profilé en matière plastique (2), les deux châssis comportant chacun une glissière (20, 21) rectiligne orientée sous un angle de 45° par rapport à la direction de mouvement relative des châssis, de sorte que les deux glissières renferment entre elles un angle droit et se coupent à des niveaux différents.

2. Dispositif selon la revendication 1, caractérisé en ce que le dispositif de serrage supplémentaire (15 à 18) pour la fixation du second profilé en matière plastique (2) est monté sur les châssis (10, 11).

3. Dispositif selon l'une quelconque des revendications précédentes, caractérisé en ce qu'il comprend des organes de palpage, en particulier des rouleaux danseurs (43), qui coopèrent avec les glissières (20, 21) et commandent les mouvement des outils (46).

4. Dispositif selon l'une quelconque des revendications précédentes, caractérisé en ce que les organes de palpage (43) et les outils (46) sont montés sur un chariot à mouvements croisés (36) dont l'un des coulisseaux peut être déplacé le long du second profilé en matière plastique (2), les organes de palpage étant appliqués contre les glissières, perpendiculairement à ce déplacement, au moyen du second coulisseau (41).

5. Dispositif selon l'une quelconque des revendications précédentes, caractérisé en ce qu'il comprend des cames porte-butée (25 à 30) montées sur les châssis (10, 11) et des organes de commutation (37) coopérant avec lesdites cames porte-butée et montés sur le chariot à mouvements croisés.

6. Dispositif selon l'une quelconque des revendications précédentes, caractérisé en ce qu'il comprend sur les châssis (10, 11) une pluralité de cames porte-butée ou de rangées de cames porte-butée qui peuvent être commandées au choix.

7. Dispositif selon l'une quelconque des revendications précédentes, caractérisé en ce que les organes de palpage (43) coopérant avec les glissières sont réglables en hauteur pour coopérer, au choix, avec l'une ou l'autre ou avec les deux glissières (20, 21).

8. Dispositif selon l'une quelconque des revendications précédentes, caractérisé en ce qu'il comprend des organes de palpage (43) disposés symétriquement et s'étendant du haut vers le bas et du bas vers le haut.

9. Dispositif selon l'une quelconque des revendications précédentes, caractérisé en ce que les mâchoires de serrage (13, 14) sont conformées en mâchoires rabattables.

10. Dispositif selon l'une quelconque des revendications précédentes, caractérisé en ce que les surfaces de serrage du dispositif de serrage sont munies, en particulier pour le blocage du second profilé en matière plastique, de touches à effleurement (52) dont les signaux commandent les mouvements des outils de traitement.
